# EUROPEAN PATENT SPECIFICATION

(11) **EP 3 205 861 B1**
(45) Date of publication and mention of the grant of the patent: **05.06.2019**
(21) Application number: 17154804.3
(22) Date of filing: 06.02.2017
(51) Int. Cl.: F02D 19/06, F02D 19/08, F02D 35/02, F02D 41/00

(54) **METHOD FOR OPERATING MULTI-CYLINDER PISTON ENGINE AND MULTI-CYLINDER PISTON ENGINE**
VERFAHREN ZUM BETRIEB EINES MEHRZYLINDRIGEN KOLBENMOTORS UND MEHRZYLINDRIGER KOLBENMOTOR.
PROCÉDÉ DE FONCTIONNEMENT D'UN MOTEUR À PISTON POLYCYLINDRIQUE ET MOTEUR À PISTON POLYCYLINDRIQUE

(30) Priority: 12.02.2016 FI 20165105
(43) Date of publication of application: 16.08.2017
(73) Proprietor: Wärtsilä Finland Oy, 65100 Vaasa (FI)
(72) Inventor: WIDELL, Kenneth, 340 Trieste (IT); PORTIN, Kaj, 65100 Vaasa (IT); WILLIAMSSON, Jonas, 65100 Vaasa (IT); JÄRVI, Arto, 65100 Vaasa (FI)
(74) Representative: Berggren Oy, Helsinki & Oulu

(56) References cited:
- EP-A2- 2 853 713
- WO-A1-2014/027141

## Description

### Technical field of the invention

The present invention relates to a method for operating a multi-cylinder piston engine in accordance with claim 1. The invention also concerns a multi-cylinder piston engine as defined in the other independent claim.

### Background of the invention

There is an increasing interest in internal combustion engines providing fuel flexibility. In both marine and power plant applications, reliability of the engines is extremely important. At the same time, there is a need to keep the operating costs of the engines as low as possible. By using lower quality fuels, such as associated gases from oil production, the fuel costs can be lowered. However, such gases with lower heat values are not always able to produce sufficient power. Also, the supply rate of a gaseous fuel may not be sufficient for producing the required power. Therefore, it is desirable to be able to operate an engine using fuels with different properties. Higher quality fuels can thus be used when more power is needed, whereas in some operating conditions lower quality fuels can be used to minimize the fuel costs. It is also possible to simultaneously use two different fuels. For instance, if the supply rate of a gaseous fuel is not sufficient, each cylinder of the engine can receive in addition to the gaseous fuel also liquid fuel, which complements the supply of fuel. However, in such a mixed fuel supply the efficiency of the engine is compromised. An alternative to the mixed fuel supply is to introduce different fuels into different cylinders. For instance, some of the cylinders may be operated using gaseous fuel and some of the cylinders may be operated using liquid fuel. In such a way, efficiency of the engine can be maximized.

EP2853713 A2 and WO2014/027141 A1 disclose methods for operating a multi-cylinder piston engine, where each cylinder of the engine can be operated using either a first fuel or a second fuel. WO2014/027141 A1 discloses a combustion process monitoring and the possibility to switch a cylinder using the first fuel to the second fuel based on the monitoring.

### Summary of the invention

An object of the present invention is to provide an improved method for operating a multi-cylinder piston engine, where each cylinder of the engine can be operated using either a first fuel or a second fuel as a main fuel. The characterizing features of the method according to the invention are given in claim 1. Another object of the invention is to provide an improved multi-cylinder piston engine. The characterizing features of the engine according to the invention are given in the other independent claim.

The method according to the invention comprises the steps of operating at least one cylinder of the engine using the first fuel as the main fuel, simultaneously operating at least one cylinder of the engine using the second fuel as the main fuel, monitoring combustion process in each cylinder of the engine by measuring a variable or a set of variables describing the combustion process in the cylinder, comparing at least one measured variable to a predetermined threshold or target value or target range, and in case the compared variables in a cylinder using the first fuel as the main fuel do not fulfill predetermined requirements, determining said cylinder as a disturbed cylinder and switching the disturbed cylinder to use the second fuel as the main fuel, and determining at least one cylinder using the second fuel as the main fuel as a target cylinder and switching the target cylinder to use the first fuel as the main fuel.

The engine according to the invention comprises first fuel feeding means for introducing first main fuel into the cylinders of the engine, second fuel feeding means for introducing second main fuel into the cylinders of the engine, means for monitoring at least one variable describing combustion process in the cylinders of engine, and control means for controlling the operation of the engine, the control means of the engine being configured to operate the engine in accordance with the method defined above.

With the method according to the invention, the engine can be maintained in a state optimally utilizing two different fuels in spite of possible disturbances of combustion process in one or more cylinders. The fuel costs can thus be minimized while the reliability of the engine can be ensured.

According to an embodiment of the invention, in case the compared variables in a cylinder using the second fuel as the main fuel do not fulfill predetermined requirements, said cylinder is determined as a disturbed cylinder and the disturbed cylinder is switched to use the first fuel as the main fuel, and at least one cylinder using the first fuel as the main fuel is determined as a target cylinder and the target cylinder is switched to use the second fuel as the main fuel.

As an alternative, amount of fuel that is introduced into a disturbed cylinder using the second fuel as the main fuel can be reduced. At least one other cylinder can be determined as a target cylinder and the amount of fuel that is introduced into the target cylinder can be increased. The target cylinder can be a cylinder using the second fuel as the main fuel. This maintains the portions of the first main fuel and the second main fuel in the engine constant.

According to an embodiment of the invention, the measured variables comprise at least one of the following: cylinder liner temperature, cylinder head temperature, exhaust gas temperature, cylinder pressure, knocking, and vibrations of the cylinders.

According to an embodiment of the invention, a cylinder is determined as a disturbed cylinder in case at least one of the compared variables is outside the predetermined range.

According to an embodiment of the invention, the target cylinder is determined on the basis of the measured variables describing the combustion process in the cylinders.

Instead of or in addition to the use of the measured variables, the target cylinder can be determined on the basis of the firing order of the engine. For instance, if several cylinders seem to be suitable for use as a target cylinder on the basis of the measured variables, the firing order of the engine can be used as a secondary criterion.

According to an embodiment of the invention, the power output of a disturbed cylinder is changed in connection with the switch from the use of one fuel to the use of the other fuel as the main fuel.

One of the first and the second fuel can be gaseous fuel and the other liquid fuel.

According to an embodiment of the invention, Otto combustion cycle is utilized in the cylinders using one of the first and the second fuel as the main fuel and Diesel combustion cycle is utilized in the cylinders where the other of the first and the second fuel is used as the main fuel.

### Brief description of the drawings

Embodiments of the invention are described below in more detail with reference to the accompanying drawings, in which

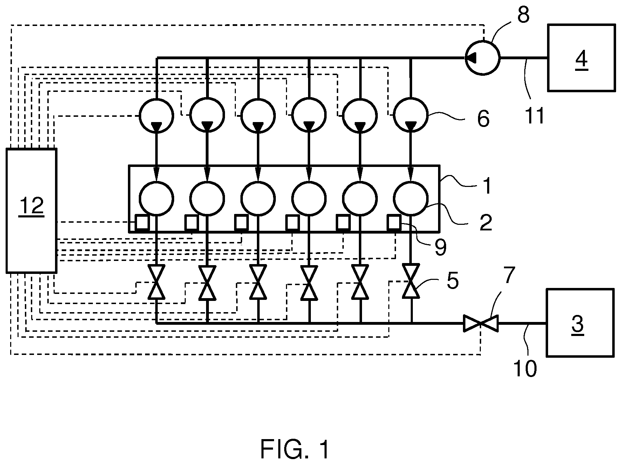

Fig. 1 shows schematically a multi-cylinder piston engine.

### Description of embodiments of the invention

In figure 1 is shown a multi-cylinder piston engine 1. The engine 1 is a large internal combustion engine, such as a main or an auxiliary engine of a ship or an engine that is used at a power plant for producing electricity. The cylinder bore of the engine 1 is at least 150 mm. In the embodiment of figure 1, the engine 1 comprises six cylinders 2, which are arranged in line. However, the engine 1 could comprise any reasonable number of cylinders 2, which could also be arranged, for instance, in a V-configuration. The engine 1 is a dual-fuel or multi-fuel engine. It can thus be operated using at least two alternative main fuels. The engine 1 comprises at least a first fuel injection system and a second fuel injection system. The first fuel injection system is configured to introduce first fuel into the cylinders 2 of the engine 1 and the second fuel injection system is configured to introduce second fuel into the cylinders 2 of the engine 1. The second fuel is different than the first fuel. The engine 1 can comprise even further fuel injection systems. The supply of both the first fuel and the second fuel can be controlled individually in respect of each cylinder 2 of the engine 1. Each cylinder 2 of the engine 1 is thus provided with first control means for controlling the supply of the first fuel into the cylinder 2 and with second control means for controlling the supply of the second fuel into the cylinder 2. Each cylinder 2 is connected to a first fuel source 3, from which the first fuel is supplied to the cylinders 2, and to a second fuel source 4, from which the second fuel is supplied to the cylinders 2 of the engine 1.

In the embodiment of figure 1, the first fuel injection system is configured to introduce gaseous fuel into the cylinders 2 of the engine 1. The gaseous fuel can be, for instance, natural gas, biogas or associated gas from an oil drilling site. Each cylinder 2 of the engine 1 is provided with a gas admission valve 5, which can be used for controlling the supply of the gaseous fuel into the cylinder 2. The gas admission valves 5 are connected to a control unit 12, which controls opening and closing of the gas admission valves 5. In the embodiment of figure 1, the gaseous fuel is not introduced directly into the cylinders 2, but each gas admission valve 5 is configured to introduce the gaseous fuel into an intake duct of the engine 1 close to the intake valves of the cylinder 2. The gaseous fuel is thus introduced into the cylinders 2 of the engine 1 during the intake stroke. The gaseous fuel is mixed with the intake air to form a homogenous mixture. The mixture is preferably a lean mixture containing more air than is needed for complete combustion of the fuel that is introduced into the cylinders 2. Part of the gaseous fuel can be introduced into a prechamber for forming a richer mixture, which facilitates ignition of the fuel/air mixture. Each cylinder 2 can be provided with a prechamber valve for controlling the supply of the gaseous fuel into the prechamber. When a cylinder 2 is operated using the gaseous fuel as the main fuel, Otto combustion process is utilized. The mixture of air and the gaseous fuel can be ignited by means of a spark plug. Alternatively, a liquid pilot fuel can be used for igniting the gaseous fuel. The gaseous fuel is supplied to the cylinders 2 of the engine 1 from a gas tank 3 via a gas supply pipe 10. The gas source could also be, for instance, a pipe line or an industrial process producing combustible gas. The first fuel injection system is provided with a main gas valve 7 for controlling the pressure of the gas that is supplied to the gas admission valves 5 of the cylinders 2. Instead of introducing the gaseous fuel into the intake duct, the gaseous fuel could also be injected directly into the cylinders 2 of the engine 1.

The second fuel injection system is configured to introduce liquid fuel into the cylinders 2 of the engine 1. The second fuel can be, for instance, light fuel oil (LFO), marine diesel oil (MDO) or heavy fuel oil (HFO). In the embodiment of figure 1, the second fuel injection system comprises an own fuel injection pump 6 for each cylinder 2 of the engine 1. The second fuel injection system also comprises a feed pump 8 for supplying fuel to the fuel injection pumps 6. The feed pump 8 supplies fuel to the fuel injection pumps 8 at a first pressure level, which can be, for instance, in the range of 5 to 15 bar. The fuel injection pumps 6 raise the fuel pressure to a second level, which is suitable for direct fuel injection into the cylinders 2 of the engine 1. The second level can be, for instance, in the range of 500 to 3000 bar. Instead of injecting the fuel directly into the cylinders 2, it can be injected into prechambers. The second fuel is supplied to the cylinders 2 of the engine from a fuel tank 4. A fuel feed pipe 11 connects the fuel injection pumps 6 to the fuel tank 4. The fuel injection pumps 6 can be controlled by the control unit 12. The fuel injection timing and amounts can be controlled by a camshaft, but the control unit 12 can be used at least for disabling any of the fuel injection pumps 6 and for preventing injection of the second fuel. For instance, the control unit 12 can control pneumatic stop cylinders, which can disable the fuel injection pumps 6.

Instead of the individual fuel injection pumps 6 of figure 1, the second fuel injection system could be provided with one or more high-pressure pumps, each serving two or more cylinders 2 of the engine 1. The second fuel injection system could thus be a common rail fuel injection system. The fuel injection system could further comprise one or more low-pressure pumps supplying fuel to the high-pressure pumps. In a common rail fuel injection system the fuel supply into the cylinders 2 would be controlled by fuel injection valves instead of the individual fuel injection pumps 6. The fuel injection valves would be controlled by the control unit 12, for instance electrically.

In addition to the fuel injection systems shown in figure 1, the engine 1 can comprise at least a pilot fuel injection system. The pilot fuel injection system can be used for introducing liquid pilot fuel into the cylinders 2 of the engine 1 for igniting the gaseous fuel. It is also possible that the second fuel injection system is used as a pilot fuel injection system or that the second fuel injection system forms part of a pilot fuel injection system. For instance, if the second fuel injection system is a common rail fuel injection system, the engine 1 can be provided with additional pilot fuel injectors, but the high-pressure and low-pressure pumps of the second fuel injection system are used also in the pilot fuel injection system. The amount of pilot fuel that is introduced into the cylinders is small compared to the amount of the main fuel. Preferably, the combustion of the pilot fuel in a cylinder 2 releases at most 10 percent of the total heat released in the cylinder 2. The pilot fuel can be, for instance, light fuel oil. The pilot fuel can be the same fuel as the second fuel. However, it is also possible that the pilot fuel and the second fuel are different fuels. The need for a pilot fuel injection system depends on the first fuel. Instead of a pilot fuel injection system, for instance spark plugs or glow plugs could be used for igniting the first fuel. It is also possible that such ignition aids are not needed, but the first fuel could be self-ignited.

Since in both the first fuel injection system and the second fuel injection system, and also in the pilot fuel injection system if the engine 1 is provided with such, the fuel supply into each cylinder 2 of the engine 1 can be individually controlled, the engine 1 can be operated using different combinations of fuels. For instance, all the cylinders 2 of the engine 1 can be operated using only the second fuel. Alternatively, all the cylinders 2 of the engine 1 can be operated using only the first fuel or the first fuel and pilot fuel. It is also possible that some of the cylinders 2 are operated using only the second fuel and some of the cylinders 2 are operated using only the first fuel or the first fuel and pilot fuel. Furthermore, it is possible to operate a cylinder 2 using a combination of the first fuel, the second fuel and possibly pilot fuel.

The preferred fuel can depend on several factors. For instance, cheaper fuel can be normally preferred, but when operating the engine 1 in an area with strict emission standards, the use of a higher quality fuel may be needed. An aim of the operation of the engine 1 is to maximize the use of the preferred fuel. However, in some situations it is not possible to use only the preferred fuel. For instance, the supply rate of the gaseous fuel may be insufficient for producing the power required from the engine 1. Also a low heat value of the gaseous fuel could cause that the required power cannot be achieved by using only the gaseous fuel in all the cylinders 2 of the engine 1. In such a case, additional fuel is needed. Mixed use of the first fuel and the second fuel in each cylinder 2 of the engine 1 would be possible. However, to achieve better efficiency, it is often better to use the first fuel in some of the cylinders 2 of the engine and the second fuel in the other cylinders 2. Some of the cylinders 2 can thus be operated using the first fuel (gaseous fuel) as the main fuel and the rest of the cylinders 2 can be operated using the second fuel (liquid fuel) as the main fuel. The expression "main fuel" refers here to the fuel that produces at least 50 percent of the heat released in a cylinder 2. In case of gaseous fuel, also liquid pilot fuel can be used in addition to the gaseous fuel.

The engine 1 is normally operated so that the preferred fuel is used as the main fuel in as many cylinders 2 as possible. In the other cylinders 2 of the engine 1, the other fuel is used as the main fuel. In some situations, there may occur a need to change the main fuel in one or more cylinders 2 although the required power of the engine 1 is not changing and the supply of both the first fuel and the second fuel remains constant. Such a need may occur, for instance, if the cylinder pressure is too high or low, knocking appears in a cylinder 2, cylinder temperature is too high, fuel injection means do not work properly, or the supply of intake air is insufficient.

For detecting a situation requiring changes in the operation of the engine 1, each cylinder 2 of the engine 1 is provided with means 9 for monitoring combustion process in the cylinder 2. The means 9 can comprise one or more sensors, which are configured to measure a variable or a set of variables describing the combustion process in the cylinder 2. The measured variables can comprise one or more of the following: cylinder liner temperature, cylinder head temperature, exhaust gas temperature, cylinder pressure, knocking or vibrations of the cylinder 2. Also the fuel injection amount could be monitored, for instance for detecting a faulty fuel injector. The measured variables are monitored by the control unit 12.

A target value, a threshold value or a target range can be determined for each of the monitored variables. The measured values can be compared to the threshold or target values or ranges, and in case predetermined requirements are not fulfilled, the cylinder 2 in question is determined as a disturbed cylinder. To address the unsatisfactory combustion in the cylinder 2, it can be switched to use the other fuel as the main fuel. For instance, if a cylinder 2 using the first fuel as the main fuel is determined as a disturbed cylinder, it is switched to use the second fuel as the main fuel. Preferably, the cylinder 2 is switched to use only the second fuel. The injection of the first fuel in the disturbed cylinder is thus terminated. However, it would also be possible to switch the disturbed cylinder to use both the second fuel and the first fuel. For instance, the disturbed cylinder could use 60 percent of the second fuel and 40 percent of the first fuel.

If the engine 1 has been operated using the first and the second fuels optimally, the switch from the first fuel to the second fuel in a cylinder 2 changes the ratio between the total amount of the first fuel and the second fuel used in the engine 1. Therefore, the change is compensated by determining at least one cylinder 2 using the second fuel as a target cylinder, and switching the target cylinder to use the first fuel as the main fuel. Preferably, the target cylinder is configured to receive the same amount of the first fuel as the disturbed cylinder received before the switch. The engine 1 can thus be maintained in a state where the first fuel and the second fuel are used optimally. Preferably, the target cylinder is switched to use only the first fuel or only the first fuel and pilot fuel. The injection of the second fuel into the target cylinder is thus terminated. However, it would also be possible to switch the target cylinder to use both the first fuel and the second fuel. For instance, the target cylinder could use 60 percent of the first fuel and 40 percent of the second fuel.

The same method can be applied also in the opposite direction. Thus, if a cylinder 2 using the second fuel is determined as a disturbed cylinder, it can be switched to use the first fuel as the main fuel. To maintain the optimal fuel usage, a cylinder 2 using the first fuel is determined as a target cylinder and switched to use the second fuel as the main fuel. Instead of addressing the unsatisfactory combustion by switching the disturbed cylinder using the second fuel as the main fuel to use the first fuel as the main fuel, the amount of the fuel supplied into the disturbed cylinder can be reduced. If reduction of the power output of the engine 1 cannot be accepted, a target cylinder can be determined and the amount of the fuel that is supplied into the target cylinder can be increased to compensate the reduced fuel supply in the disturbed cylinder. Preferably, the target cylinder uses the second fuel as the main fuel, and the portions of the first fuel and the second fuel do not change.

If unsatisfactory combustion is addressed by reducing fuel supply in the disturbed cylinder and increasing the fuel supply in the target cylinder, the power outputs of different cylinders 2 can differ from each other. The engine 1 could also be operated so that the cylinders 2 using the first fuel as the main fuel have different power outputs than the cylinders 2 using the second fuel as the main fuel. For instance, if the same power output cannot be achieved with the first fuel as with the second fuel, those cylinders 2 that are operated using the second fuel as the main fuel can produce more power than the cylinders 2 that are operated using the first fuel as the main fuel.

The target cylinder can be determined using the same variables that are used for determining the disturbed cylinders. The measured variables are thus compared to predetermined values or ranges, and the most suitable target cylinder is selected in each case. In addition, the firing order of the engine 1 can be used for determining the target cylinder. For instance, if the switch from one main fuel to another main fuel in the target cylinder would affect the power output of the target cylinder, the target cylinder can be selected on the basis of the firing order of the engine 1 so that the power output of the engine 1 remains as steady as possible. Vibrations of the engine 1 can thus be minimized.

Disturbed cylinders can be detected using either one or several variables. For detecting a disturbed cylinder, in the simplest form only one variable is monitored and compared to a threshold value. In case the measured value is below or above the threshold value, depending on the variable, the cylinder 2 is determined as a disturbed cylinder. For instance, if the variable is exhaust gas temperature, a temperature above the predetermined threshold value can be a trigger for determining the cylinder 2 as a disturbed cylinder. With some other variable, a measured value below the threshold value can be a trigger for a status as a disturbed cylinder. The measured values can also be compared to predetermined ranges, and a value outside the range can be a trigger for determining the cylinder 2 as a disturbed cylinder. If several variables are measured, a cylinder 2 can be determined as a disturbed cylinder for instance if at least one of the measured variables is outside the predetermined range or below or above a threshold value. Alternatively, it may be required that at least two of the measured values are outside the ranges or below or above the threshold values. It is also possible to use the measured variables to calculate new variables and compare those variables to target values. For instance, instead of using cylinder peak pressures for determining disturbed cylinders, indicated mean effective pressures (IMEP) could be calculated and compared to target ranges. Similarly, temperature measurements could be used for calculating heat release in a cylinder.

In a more complex form, comparison of several measured variables to target values can be used for determining an index value describing the combustion process, and the index value is used for determining the status of the cylinder 2. The threshold or target values or target ranges can be different for the cylinders 2 using the first fuel as the main fuel and the cylinders 2 using the second fuel as the main fuel.

The target cylinder can be selected in a similar way using one or more variables. As a simple example, the target cylinder could be the cylinder 2 with lowest exhaust gas temperature. In a more complex form, several variables are used for determining an index value and the cylinder 2 with the best index value is selected as the target cylinder. In any case, the aim is to select the most suitable cylinder 2 as the target cylinder. For instance, if the switch from one main fuel to the other main fuel or the load increase is expected to increase the exhaust gas temperature in the target cylinder, the target cylinder should be selected so that the exhaust gas temperature is not expected to rise above an allowed maximum value.

It will be appreciated by a person skilled in the art that the invention is not limited to the embodiments described above, but may vary within the scope of the appended claims. For instance, although an embodiment using gaseous first fuel and liquid second fuel has been described above, both the first fuel and the second fuel could be either liquid fuels or gaseous fuels. The fuel supply into the cylinders can be implemented in many different ways.

## Claims

1. A method for operating a multi-cylinder piston engine (1), where each cylinder (2) of the engine (1) can be operated using either a first fuel or a second fuel as a main fuel, the method comprising the steps of
- operating at least one cylinder (2) of the engine (1) using the first fuel as the main fuel,
- simultaneously operating at least one cylinder (2) of the engine (1) using the second fuel as the main fuel,
- monitoring combustion process in each cylinder (2) of the engine (1) by measuring a variable or a set of variables describing the combustion process in the cylinder (2),
- comparing at least one measured variable to a predetermined threshold or target value or target range, and
- in case the compared variables in a cylinder (2) using the first fuel as the main fuel do not fulfill predetermined requirements, determining said cylinder (2) as a disturbed cylinder and switching the disturbed cylinder to use the second fuel as the main fuel, and determining at least one cylinder (2) using the second fuel as the main fuel as a target cylinder and switching the target cylinder to use the first fuel as the main fuel.

2. A method according to claim 1, wherein in case the compared variables in a cylinder (2) using the second fuel as the main fuel do not fulfill predetermined requirements, said cylinder (2) is determined as a disturbed cylinder and the disturbed cylinder is switched to use the first fuel as the main fuel, and at least one cylinder (2) using the first fuel as the main fuel is determined as a target cylinder and the target cylinder is switched to use the second fuel as the main fuel.

3. A method according to claim 1, wherein in case the compared variables in a cylinder (2) using the second fuel as the main fuel do not fulfill predetermined requirements, said cylinder (2) is determined as a disturbed cylinder and the amount of fuel that is introduced into the disturbed cylinder is reduced.

4. A method according to claim 3, wherein at least one other cylinder (2) is determined as a target cylinder and the amount of fuel that is introduced into the target cylinder is increased.

5. A method according to claim 4, wherein the target cylinder is a cylinder (2) using the second fuel as the main fuel.

6. A method according to any of the preceding claims, wherein the measured variables comprise at least one of the following: cylinder liner temperature, cylinder head temperature, exhaust gas temperature, cylinder pressure, knocking, vibrations of the cylinders (2).

7. A method according to any of the preceding claims, wherein a cylinder (2) is determined as a disturbed cylinder in case at least one of the compared variables is outside a predetermined range.

8. A method according to any of the preceding claims, wherein the target cylinder is determined on the basis of the measured variables describing the combustion process in the cylinders (2).

9. A method according to any of the preceding claims, wherein the target cylinder is determined on the basis of the firing order of the engine (1).

10. A method according to any of the preceding claims, wherein the power output of a disturbed cylinder is changed in connection with the switch from the use of one fuel to the use of the other fuel as the main fuel.

11. A method according to any of the preceding claims, wherein one of the first and the second fuel is gaseous fuel and the other is liquid fuel.

12. A method according to any of the preceding claims, wherein Otto combustion cycle is utilized in the cylinders (2) using one of the first and the second fuel as the main fuel and Diesel combustion cycle is utilized in the cylinders (2) where the other of the first and the second fuel is used as the main fuel.

13. A multi-cylinder piston engine (1) comprising
- first fuel feeding means (5, 7, 10) for introducing first main fuel into the cylinders (2) of the engine (1),
- second fuel feeding means (6, 8, 11) for introducing second main fuel into the cylinders (2) of the engine (1),
- means (9) for monitoring at least one variable describing combustion process in the cylinders (2) of engine (1), and
- control means (12) for controlling the operation of the engine (1),
wherein the control means (12) of the engine (1) are configured to operate the engine (1) in accordance with the method according to any of the preceding claims.

## Patentansprüche

1. Verfahren zum Betreiben eines mehrzylindrigen Kolbenmotors (1), wobei jeder Zylinder (2) des Motors (1) entweder unter Verwendung eines ersten Kraftstoffs oder eines zweiten Kraftstoffs als Hauptkraftstoff betrieben werden kann, wobei das Verfahren folgende Schritte umfasst
- Betreiben mindestens eines Zylinders (2) des Motors (1) unter Verwendung des ersten Kraftstoffs als den Hauptkraftstoff,
- Betreiben mindestens eines Zylinders (2) des Motors (1) unter Verwendung des zweiten Kraftstoffs als den Hauptkraftstoff,
- Überwachen des Verbrennungsprozesses in jedem Zylinder (2) des Motors (1) durch Messen einer Größe oder einer Reihe von Größen, die den Verbrennungsprozess in dem Zylinder (2) wiedergeben,
- Vergleichen von mindestens einer Messgröße mit einem vorbestimmten Schwellen- oder Zielwert oder einem Zielbereich, und
- falls die verglichenen Größen in einem Zylinder (2), der den ersten Kraftstoff als den Hauptkraftstoff verwendet, vorbestimmte Anforderungen nicht erfüllen, Bestimmen dieses Zylinders (2) als einen gestörten Zylinder und Umschalten des gestörten Zylinders auf die Verwendung des zweiten Kraftstoffs als den Hauptkraftstoff, und Bestimmen mindestens eines Zylinders (2), der den zweiten Kraftstoff als den Hauptkraftstoff verwendet, als einen Zielzylinder und Umschalten des Zielzylinders, um den ersten Kraftstoff als den Hauptkraftstoff zu verwenden.

2. Verfahren nach Anspruch 1, wobei, falls die verglichenen Größen in einem Zylinder (2), der den zweiten Kraftstoff als den Hauptkraftstoff verwendet, vorbestimmte Anforderungen nicht erfüllen, dieser Zylinder (2) als ein gestörter Zylinder bestimmt wird und der gestörte Zylinder umgeschaltet wird, um den ersten Kraftstoff als den Hauptkraftstoff zu verwenden, und mindestens ein Zylinder (2), der den ersten Kraftstoff als den Hauptkraftstoff verwendet, als ein Zielzylinder bestimmt wird und der Zielzylinder umgeschaltet wird, um den zweiten Kraftstoff als den Hauptkraftstoff zu verwenden.

3. Verfahren nach Anspruch 1, wobei, falls die verglichenen Größen in einem Zylinder (2), der den zweiten Kraftstoff als den Hauptkraftstoff verwendet, vorbestimmte Anforderungen nicht erfüllen, der Zylinder (2) als ein gestörter Zylinder bestimmt wird und die Kraftstoffmenge, die in den gestörten Zylinder eingeleitet wird, reduziert wird.

4. Verfahren nach Anspruch 3, wobei mindestens ein weiterer Zylinder (2) als ein Zielzylinder bestimmt wird und die Kraftstoffmenge, die in den Zielzylinder eingeleitet wird, erhöht wird.

5. Verfahren nach Anspruch 4, wobei der Zielzylinder ein Zylinder (2) ist, der einen zweiten Kraftstoff als den Hauptkraftstoff verwendet.

6. Verfahren nach einem der vorhergehenden Ansprüche, wobei die Messgrößen mindestens eines der folgenden umfassen: Temperatur der Zylinderlaufbuchsen, Zylinderkopftemperatur, Abgastemperatur, Zylinderdruck, Klopfen, Schwingungen der Zylinder (2).

7. Verfahren nach einem der vorhergehenden Ansprüche, wobei ein Zylinder (2) als ein gestörter Zylinder bestimmt wird, wenn mindestens eine der verglichenen Größen außerhalb des vorbestimmten Bereichs liegt.

8. Verfahren nach einem der vorhergehenden Ansprüche, wobei der Zielzylinder basierend auf den Messgrößen, die den Verbrennungsprozess in den Zylindern (2) wiedergeben, bestimmt wird.

9. Verfahren nach einem der vorhergehenden Ansprüche, wobei der Zielzylinder basierend auf der Zündreihenfolge des Motors (1) bestimmt wird.

10. Verfahren nach einem der vorhergehenden Ansprüche, wobei die Leistungsabgabe eines gestörten Zylinders in Verbindung mit dem Umschalten von der Verwendung eines Kraftstoffs auf die Verwendung des anderen Kraftstoffs als den Hauptkraftstoff verändert wird.

11. Verfahren nach einem der vorhergehenden Ansprüche, wobei einer von dem ersten und zweiten Kraftstoff gasförmiger Kraftstoff ist und der andere flüssiger Kraftstoff ist.

12. Verfahren nach einem der vorhergehenden Ansprüche, wobei in den Zylindern (2), die einen des ersten und des zweiten Kraftstoffs als den Hauptkraftstoff verwenden, ein Otto-Kreisprozess verwendet wird, und in den Zylindern (2), in denen der andere des ersten und zweiten Kraftstoffs als der Hauptkraftstoff verwendet wird, ein Dieselkreisprozess verwendet wird.

13. Mehrzylindriger Kolbenmotor (1), umfassend
- erste Kraftstoff-Zuführmittel (5, 7, 10) zum Einleiten von erstem Hauptkraftstoff in die Zylinder (2) des Motors (1),
- zweite Kraftstoff-Zuführmittel (6, 8, 11) zum Einleiten von zweitem Hauptkraftstoff in die Zylinder (2) des Motors (1),
- Mittel (9) zum Überwachen mindestens einer Größe, die den Verbrennungsprozess in den Zylindern (2) des Motors (1) wiedergibt, und
- Steuermittel (12) zum Steuern des Betriebs des Motors (1),
wobei die Steuermittel (12) des Motors (1) dafür ausgelegt sind, den Motor (1) gemäß dem Verfahren nach einem der vorhergehenden Ansprüche zu betreiben.

## Revendications

1. Procédé pour le fonctionnement d'un moteur à piston polycylindrique (1), dans lequel chaque cylindre (2) du moteur (1) peut fonctionner à l'aide d'un premier carburant ou d'un deuxième carburant comme carburant principal, le procédé comprenant les étapes suivantes :
- actionnement d'au moins un cylindre (2) du moteur (1) à l'aide du premier carburant comme carburant principal,
- actionnement simultané d'au moins un cylindre (2) du moteur (1) à l'aide du deuxième carburant comme carburant principal,
- surveillance du processus de combustion dans chaque cylindre (2) du moteur (1) en mesurant une variable ou un ensemble de variables décrivant le processus de combustion dans le cylindre (2),
- comparaison d'au moins une variable mesurée avec un seuil prédéterminé ou une valeur cible ou une plage cible, et
- si les variables comparées dans un cylindre (2) utilisant le premier carburant comme carburant principal ne remplissent pas les conditions prédéterminées, détermination dudit cylindre (2) comme cylindre perturbé et commutation du cylindre perturbé pour utiliser le deuxième carburant comme carburant principal, et détermination d'au moins un cylindre (2) utilisant le deuxième carburant comme carburant principal comme cylindre cible et commutation du cylindre cible pour utiliser le premier carburant comme carburant principal.

2. Procédé selon la revendication 1, dans lequel, si les variables comparées dans un cylindre (2) utilisant le deuxième carburant comme carburant principal ne remplissent pas les conditions prédéterminées, ledit cylindre (2) est déterminé comme cylindre perturbé et le cylindre perturbé est commuté pour utiliser le premier carburant comme carburant principal, et au moins un cylindre (2) utilisant le premier carburant comme carburant principal est déterminé comme cylindre cible et le cylindre cible est commuté pour utiliser le deuxième carburant comme carburant principal.

3. Procédé selon la revendication 1, dans lequel, si les variables comparées dans un cylindre (2) utilisant le deuxième carburant comme carburant principal ne remplissent pas les conditions prédéterminées, ledit cylindre (2) est déterminé comme cylindre perturbé et la quantité de carburant introduite dans le cylindre perturbé est réduite.

4. Procédé selon la revendication 3, dans lequel au moins un autre cylindre (2) est déterminé comme cylindre cible et la quantité de carburant introduite dans le cylindre cible est augmentée.

5. Procédé selon la revendication 4, dans lequel le cylindre cible est un cylindre (2) utilisant le deuxième carburant comme carburant principal.

6. Procédé selon l'une quelconque des revendications précédentes, dans lequel les variables mesurées comprennent au moins l'un parmi : la température de chemise de cylindre, la température de culasse, la température de gaz d'échappement, la pression de cylindre, le cliquetis, les vibrations des cylindres (2) .

7. Procédé selon l'une quelconque des revendications précédentes, dans lequel un cylindre (2) est déterminé comme cylindre perturbé lorsque l'une au moins des variables comparées tombe en dehors d'une plage prédéterminée.

8. Procédé selon l'une quelconque des revendications précédentes, dans lequel le cylindre cible est déterminé sur la base des variables mesurées décrivant le processus de combustion dans les cylindres (2).

9. Procédé selon l'une quelconque des revendications précédentes, dans lequel le cylindre cible est déterminé sur la base de l'ordre d'allumage du moteur (1) .

10. Procédé selon l'une quelconque des revendications précédentes, dans lequel la sortie de puissance d'un cylindre perturbé est modifiée en connexion avec la commutation entre l'utilisation d'un carburant et l'utilisation de l'autre carburant comme carburant principal.

11. Procédé selon l'une quelconque des revendications précédentes, dans lequel l'un parmi les premier et deuxième carburants est un carburant gazeux et l'autre est un carburant liquide.

12. Procédé selon l'une quelconque des revendications précédentes, dans lequel un cycle de combustion Otto est utilisé dans les cylindres (2) utilisant l'un parmi le premier et le deuxième carburant comme carburant principal et un cycle de combustion Diesel est utilisé dans les cylindres (2) dans lesquels l'autre parmi le premier et le deuxième carburant est utilisé comme carburant principal.

13. Moteur à piston polycylindrique (1) comprenant
- un premier moyen d'alimentation en carburant (5, 7, 10) destiné à introduire le premier carburant principal dans les cylindres (2) du moteur (1),
- un deuxième moyen d'alimentation en carburant (6, 8, 11) destiné à introduire le deuxième carburant principal dans les cylindres (2) du moteur (1),
- un moyen (9) destiné à surveiller au moins une variable décrivant le processus de combustion dans les cylindres (2) du moteur (1), et
- des moyens de commande (12) destinés à commander le fonctionnement du moteur (1),
dans lequel les moyens de commande (12) du moteur (1) sont configurés pour faire fonctionner le moteur (1) conformément au procédé selon l'une quelconque des revendications précédentes.
